# EUROPÄISCHE PATENTSCHRIFT

(11) **EP 2 570 907 B1**
(45) Veröffentlichungstag und Bekanntmachung des Hinweises auf die Patenterteilung: **22.01.2020**
(21) Anmeldenummer: 12184979.8
(22) Anmeldetag: 19.09.2012
(51) Int. Cl.: G06F 3/0482

(54) **Verfahren zum Betreiben einer Benutzerschnittstelle einer Datenverarbeitungsanordnung**
Method for operating a user interface of a data processing system
Procédé de fonctionnement d'une interface utilisateur d'un agencement de traitement de données

(30) Priorität: 19.09.2011 DE 102011113575
(43) Veröffentlichungstag der Anmeldung: 20.03.2013
(73) Patentinhaber: Deutsche Telekom AG, 53113 Bonn (DE)
(72) Erfinder: Hoffmann, Tobias, 53111 Bonn (DE); Lihs, Martin, 99423 Weimar (DE)
(74) Vertreter: Braun-Dullaeus, Karl-Ulrich

(56) Entgegenhaltungen:
- EP-A2- 2 256 611
- EP-A2- 2 290 507

## Beschreibung

Die Erfindung betrifft ein Verfahren zum Betreiben einer Benutzerschnittstelle einer Datenverarbeitungsanordnung.

Auf dem Markt haben sich unterschiedliche Bedienlogiken für Datenverarbeitungsanordnungen, wie PCs, Notebooks, Smartphones usw. ausgebildet. Unter einer Datenverarbeitungsanordnung wird im Wesentlichen auch eine Rechnerwolke (Cloud-Computing) angesehen; die Benutzerschnittstelle kann dann durch Endgeräte wie Smartphones, PCs usw. bereitgestellt werden. Die Bedienlogik ist dabei weitgehend abhängig von der eingesetzten Hardware. Dabei kristallisiert sich eine Gruppe von mausbasierten Benutzerschnittstellen aus, die sich durch Interaktion des Nutzers mit den bisher üblichen Eingabemitteln des PCs, also insbesondere Maus und Tastatur, auszeichnet. Daneben existiert eine Bedienlogik, die sich auf dem Gebiet der Tablet-PCs und Smartphones mit Touchscreen durchgesetzt hat. Hier ist in der Regel keine Maus vorhanden; auch die Tastatur steht häufig nur bedarfsweise als Soft-Tastatur zur Verfügung. Die Interaktion des Nutzers erfolgt zumeist über Berührungen des Bildschirms.

Bei der Verwendung von Programmen oder Applikationen auf verschiedenen Geräten ist die Bedienführung somit nicht einheitlich für den Endnutzer. Will der Endnutzer dasselbe Programm oder dieselbe Applikation auf unterschiedlichen Endgeräten bedienen, muss er sich möglicherweise jedes Mal auf unterschiedliche Bedienlogiken einstellen. Nutzer, die sich an die Nutzung von touchscreenbasierten Endgeräten gewöhnt haben, können diese dieselbe Applikation auf einem PC nicht mehr wie gewohnt bedienen. Gleiches gilt umgekehrt für die Benutzer von mausbasierten Endgeräten, die die gleiche Applikation auf einem touchscreenbasierten Endgerät nutzen möchten. Ferner gibt es noch PCs oder andere Endgeräte, die sowohl mit Touchscreen als auch mit Maus bedient werden können. Der Nutzer muss dann erst untersuchen, welcher Treiber auf diesem Gerät installiert ist und welche Bedienlogik dadurch bedingt wird.

Aus der EP 2 256 611 A2 ist ein mobiles Endgerät mit mehreren berührungsempfindlichen Bildschirmen bekannt, wobei ein zu bearbeitendes Objekt auf den unterschiedlichen Bildschirmen in jeweils unterschiedliche Repräsentationen dargestellt und bearbeitete werden kann.

Die EP 2 290 507 A2 offenbart ein auf einem Computersystem realisiertes Verfahren, das sich sowohl einer Touch basierten als auch einer nicht Touch basierten Eingabe bedient.

Es ist Aufgabe der vorliegenden Erfindung, ein verbessertes Verfahren zum Betreiben einer Benutzerschnittstelle einer Datenverarbeitungsanordnung bereit zu stellen.

Die der Erfindung zugrunde liegende Aufgabe wird gelöst durch ein Verfahren nach Anspruch 1. Bevorzugte Weiterbildungen ergeben sich aus den Unteransprüchen.

Der Kern der Erfindung liegt insbesondere darin, dass zwei Bedienlogiken im Endgerät hinterlegt sind. Die beiden Bedienlogiken umfassen dabei eine jeweils erste oder jeweils eine zweite Abfolge von Auswahlfunktionen, die sich voneinander unterscheiden. Die erste und die zweite Bedienlogik schließen dabei insbesondere die jeweils andere Abfolge von Auswahlfunktionen aus. Insofern ist es möglich, dem Nutzer diejenige Bedienlogik zur Verfügung zu stellen, die er von einem Endgerät (z.B. seinem Hauptgerät) gewohnt ist, um diese dann auch auf einem anderen Endgerät (z.B. Zweitgerät) zu nutzen. Eine Umstellung in seiner Bediengewohnheit z.B. von einem touchscreenbasierten System auf ein mausbasiertes Eingabesystem ist dann nicht mehr erforderlich. Er kann direkt auf die Bedienlogik zugreifen und wie gewohnt seine Aufgaben durchführen. Die touchscreenbasierte Bedienlogik kann dann aber auch für Eingaben per Maus anwendbar sein und umgekehrt. Dabei ist insbesondere vorgesehen, dass die Bedienlogik und die damit verbundenen Abfolgen von Auswahlfunktionen zwar unterschiedliche Benutzereingaben erfordern; die Ergebnisse der jeweiligen Abfolgen von Auswahlfunktionen, nämlich dass einem Bearbeitungsobjekt der selbe Bearbeitungsschritt zugewiesen wird, bleibt aber identisch.

Eine Bedienlogik kann mehrere Abfolgen von Auswahlfunktionen umfassen, wobei innerhalb einer Bedienlogik jeweils zumindest eine Bedienlogik vorgesehen ist, die in der jeweils anderen Bedienlogik nicht vorgesehen ist. So ist insbesondere die erste Abfolge von Auswahlfunktionen in der ersten Bedienlogik hinterlegt, während sie in der zweiten Bedienlogik aber nicht hinterlegt ist; entsprechendes gilt für die zweite Bedienlogik, in der vorzugsweise die zweite Abfolge von Auswahlfunktion zwar hinterlegt ist; die erste Abfolge von Auswahlfunktionen jedoch nicht.

Vorzugsweise umfasst das Verfahren einen Betriebsmodus, in dem ausschließlich eine Bedienlogik aktiviert ist. Somit ist in dem Betriebsmodus lediglich einer der Bedienlogiken aktiv, nämlich z.B. entweder eine mausbasierte oder (ausschließliches oder) eine touchscreenbasierte Bedienlogik.

Erfindungsgemäß ist ein Erkennungsmodus vorgesehen, in dem von Nutzer getätigten Eingabebefehle zu einem Auswerteergebnis ausgewertet werden, wobei basierend auf dem Auswerteergebnis eine Bedienlogik ausgewählt wird. Der Nutzer gibt in diesem Erkennungsmodus dem System quasi vor, in welchem Bedienmodus er gerne arbeiten möchte. In dem Erkennungsmodus ist dann vorzugsweise vorgesehen, dass die Bedienung des Systems mit mehreren Bedienlogiken möglich ist, so dass im Erkennungsmodus vorzugsweise zumindest zwei Bedienlogiken aktiv sind. Die im Erkennungsmodus ausgewählte Bedienlogik kann dann nachfolgend im Betriebsmodus aktiv geschaltet sein. Im Erkennungsmodus können getätigte Benutzereingaben dahingehend untersucht werden, ob diese einer bestimmten Bedienlogik zugeordnet werden können. Versucht z.B. der Nutzer eine Anwendung durch Doppelklicken auf ein entsprechendes Desktopsymbol zu öffnen, dann kann erkannt werden, dass das Doppelklicken zumeist in der mausbasierten Bedienlogik zur Anwendung kommt. Wird ein Nutzer eine Funktion mittels Doppelklick markieren, wird automatisch die mausgesteuerte Bedienlogik ausgewählt. Einer touchscreenbasierten Benutzerführung ist die Anwendung eines Doppelklicks zum Ausführen von Funktionen fremd. Im Gegensatz dazu könnte die touchscreenbasierte Bedienlogik durch einfaches Antippen eines Symbols erkannt werden. Nach der Auswahl der Bedienlogik kann der Erkennungsmodus automatisch ausgeschaltet werden.

An dem Endgerät ist insbesondere eine Eingabeeinheit angeschlossen oder das Endgerät umfasst eine Eingabeeinheit. Die Eingabeeinheit kann einen Touchscreen, eine Maus, eine Tastatur, eine Gestensteuerung, eine Sprach- oder Audiosteuerung und sonstige Eingabemittel umfassen oder durch solche dargestellt sein. An das Endgerät ist insbesondere auch eine Ausgabeeinheit insbesondere ein Bildschirm angeschlossen oder ein solcher umfasst. Benutzereingaben werden über die Eingabeeinheit eingegeben. Das Bearbeitungsobjekt ist vorzugsweise auf der Ausgabeeinheit dargestellt, insbesondere zumindest symbolisch dargestellt.

Die Erfindung betrifft ferner ein Datenverarbeitungsanordnung mit einer Benutzerschnittstelle, welche mittels eines Verfahrens der vorgenannten Art beschrieben ist.

Die Erfindung wird anhand der Figuren nachfolgend näher erläutert. Hierin zeigt
- Figur 1: eine erste Bedienlogik in bildlicher Abfolge dargestellt,
- Figur 2: eine zweite Bedienlogik in bildlicher Abfolge dargestellt.
- Figur 3: Flussdiagramme der in den Figuren 2 und 3 dargestellten Bedienlogiken.

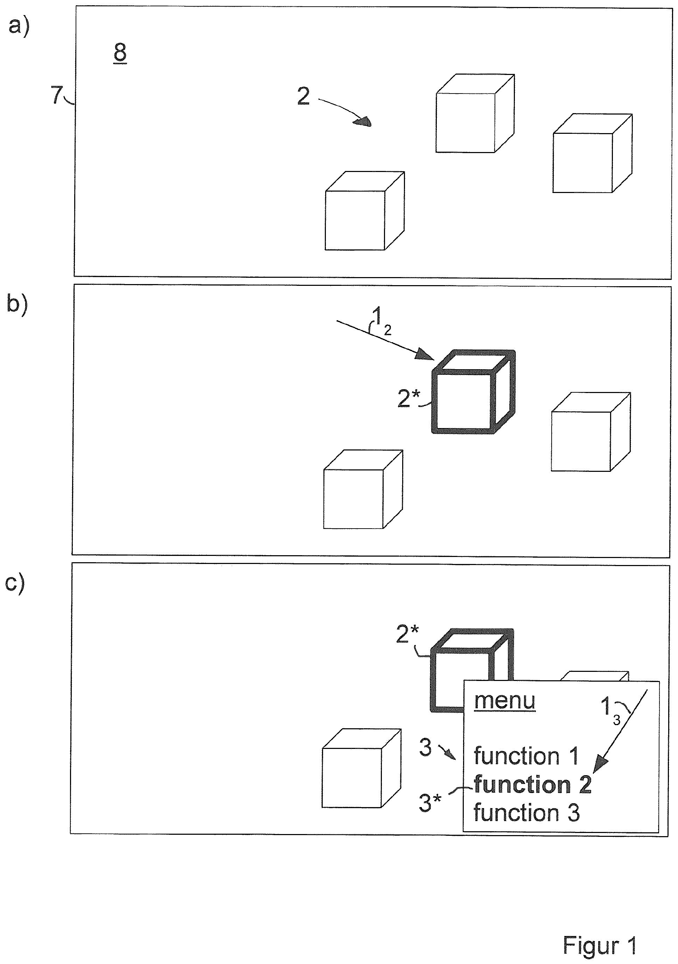

Anhand Figur 1 wird die mausbasierte Bedienlogik (z.B. erste Bedienlogik) näher erläutert. Auf einem Bildschirm 8 eines Computers 7 sind mehrere Bearbeitungsobjekte 2 sichtbar angeordnet. Die Bearbeitungsobjekte 2 sind in Form von Symbolen abgebildet, die stellvertretend für Dateneinheiten, z.B. Fotos, Textdateien oder ähnliches stehen. In einem ersten Schritt tätigt der Nutzer eine Benutzereingabe 1₂, indem er beispielsweise den Mauszeiger auf ein konkret auszuwählendes Bearbeitungsobjekt 2* führt und dann die linke Maustaste betätigt. Damit wird das Bearbeitungsobjekt 2* ausgewählt. Anschließend wird eine Bearbeitungsfunktion 3 durch eine weitere Benutzereingabe 1₃ ausgewählt. Dabei betätigt der Nutzer beispielsweise die rechte Maustaste betätigt, worauf sich das Kontextmenü öffnet. Dem Nutzer werden eine Auswahl von mehreren Bearbeitungsfunktionen angeboten. Durch Bewegen des Mauszeigers auf beispielsweise "function 2" und anschließendes Betätigen der linken Maustaste wird diese "function 2" als Bearbeitungsfunktion 3* ausgewählt. Das Bewegen des Mauszeigers und das Betätigen von Maustasten stellen in diesem Fall jeweils die Benutzereingaben dar. In Abhängigkeit der Mauszeigerstellungen und der betätigten Tasten werden dann Auswahlfunktionen aktiviert, nämlich wenn z. B. der Mauszeiger auf ein Objekt zeigt und zugleich eine Maustaste betätigt wird. Es können auch mehrere solcher Benutzereingaben erforderlich sein, um eine Auswahlfunktion zu aktivieren. Das Ergebnis einer Auswahlfunktion ist dann insbesondere ein ausgewähltes Bearbeitungsobjekt oder eine ausgewählte Bearbeitungsfunktion. Eine mausbasierte Bedienlogik könnte beispielsweise auch folgende Schritte vorsehen: Drücken der Steuerungstaste und gleichzeitig Doppelklick auf die Fotos zur Auswahl der Objekte. Anschließend Auswahl der Funktion Rotation zum Drehen der Fotos durch Auswahl des entsprechenden Funktion aus einer Menüleiste.

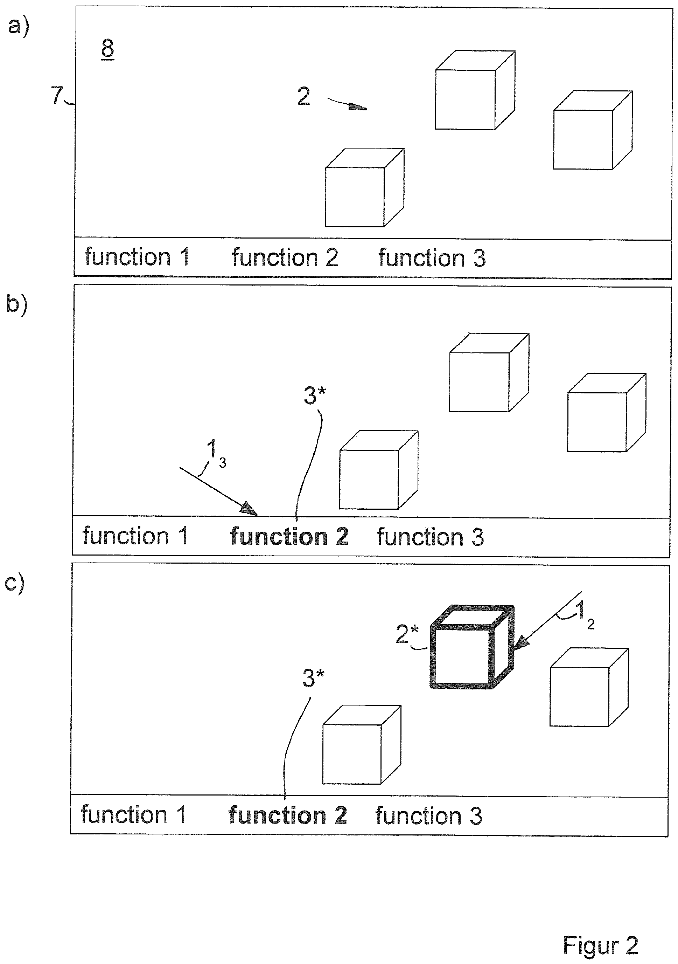

Anhand der Figur 2 wird die touchscreenbasierte Bedienlogik erläutert, wobei lediglich Unterschiede zur oben beschriebenen mausbasierten Bedienlogik erläutert werden. Abweichend zur mausbasierten Bedienlogik wird zunächst anhand einer Benutzeingabe 1₃ und eine dadurch aktivierte Auswahlfunktion eine Bearbeitungsfunktion 3* ausgewählt. Anschließend wird über eine weitere Benutzereingabe 1₂ und eine dadurch aktivierte Auswahlfunktion ein Bearbeitungsobjekt 2* ausgewählt.

Eine touchscreenbasierte Bedienlogik könnte auch wie folgt aussehen: Betätigen des "function 2"-Buttons in der Statusleiste, anschließend Antippen eines auszuwählenden Bildes.

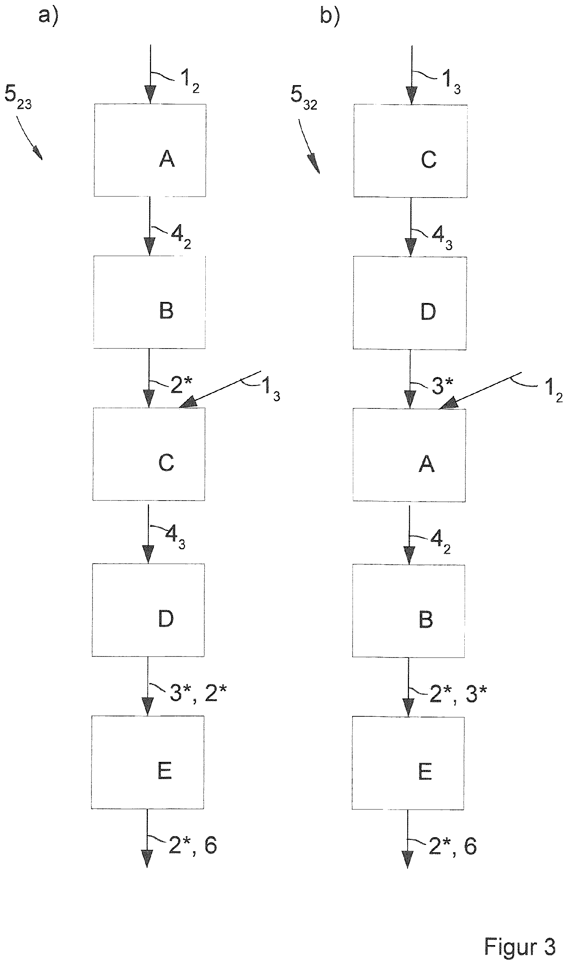

In Figur 3 sind Flussdiagramme der unterschiedlichen Auswahlvorgänge in einem Flussdiagramm dargestellt; wobei Figur 3a) ein "mausbasiertes" Flussdiagramm und Figur 3b) ein "touchscreenbasiertes" Flussdiagramm zeigt.

In Figur 3a) werden zunächst Benutzereingaben 1₂ zum Auswählen eines Bearbeitungsobjekts 2 getätigt, beispielsweise ein Anklicken eines Objekts mit der Maus, wie in Figur 1 dargestellt. In einem Verfahrensschritt A wird dann aus den getätigten Benutzereingaben eine Auswahlfunktion 4₂ aktiviert. Im nächsten Verfahrensschritt B wird dann die Auswahlfunktion 4₂ ausgeführt; als Ergebnis ist ein konkretes Bearbeitungsobjekt 2* ausgewählt, welches dann bearbeitet werden kann. Dann erfolgt die weitere Benutzereingabe 1₃, mit der eine Bearbeitungsfunktion 3* ausgewählt werden soll. In einem Schritt C wird durch die getätigte Benutzereingabe, beispielsweise das Anklicken eines Funktionsfeldes, eine Auswahlfunktion 4₃ aktiviert. Im nächsten Verfahrensschritt D wird dann die Auswahlfunktion ausgeführt. Als Ergebnis des Schritts D ist dann eine konkrete Bearbeitungsfunktion 3* tatsächlich ausgewählt. Im Schritt E erfolgt dann die Zuweisung eines Bearbeitungsschritts 6 zum ausgewählten Bearbeitungsobjekt 2* aufgrund der ausgewählten Bearbeitungsfunktion 3*. In Figur 3a) ist somit eine Bedienlogik 5₂₃ dargestellt, in der die Abfolge der Auswahlfunktion in der Reihenfolge 4₂ und anschließend 4₃ hinterlegt ist.

In Figur 3b) ist das entsprechende Flussdiagramm für die touchscreenbasierte Bedienlogik 5₃₂ dargestellt. Dem Grunde nach ist diese identisch zur nach Figur 3a) beschriebenen Bedienlogik. Jedoch sind die Verfahrensschritte A, B vertauscht mit den Verfahrensschritten C, D. Es erfolgt zunächst nämlich abweichend das Auswählen der Bearbeitungsfunktion 3 anhand der Benutzereingaben 1₃ durch in den Schritte CD. Anschließend erfolgt eine weitere Benutzereingabe 1₂, anhand der das zu bearbeitende Bearbeitungsobjekt 2 ausgewählt wird. Dabei wird zunächst anhand der Benutzereingabe 1₂ durch den Verfahrensschritt A eine Auswahlfunktion 4₂ zum Auswählen des Bearbeitungsobjekts 2* ausgeführt. Anschließend wird die Auswahlfunktion 4₂ im Verfahrensschritt B durchgeführt. Am Ende des Verfahrensschritts B ist dann das Bearbeitungsobjekt 2* und die Bearbeitungsfunktion 3* ausgewählt. Im nächsten Schritt E folgt analog zur mausbasierten Bedienlogik nach Figur 3a) das Zuordnen des Bearbeitungsschritts 6 dem Bearbeitungsobjekt 2*. Die beiden Verfahrensabläufe nach den Figuren 3a) und 3b) kommen schließlich zu dem selben Ergebnis, nämlich dass dem Bearbeitungsobjekt 2* aufgrund der ausgewählten Bearbeitungsfunktion 3* ein Bearbeitungsschritt 6 zugewiesen ist.

Im Vergleich der Unterschiede der Abläufe in den Figuren 3a und 3b wird deutlich, dass eine automatisierte Erkennung der Bedienlogik innerhalb weniger Schritte erfolgen kann.

Einer touchscreenbasierte Benutzerführung ist die Anwendung eines Doppelklicks zum Ausführen von Funktionen fremd. Hingegen ist bei mausgesteuerter Bedienführung die Auswahl und Markierung durch Doppelklick eine gängige Funktion. Wird ein Nutzer eine Funktion mittels Doppelklick markieren, wird automatisch auf eine mausgesteuerte Bedienlogik entschieden.

Ein Endgerät, welches einer Datenverarbeitungsanordnung zugeordnet ist oder die Datenverarbeitungsanordnung selbst darstellt, kann ein Anzeigegerät, ein Bediengerät, einen Prozessor und einen Speicher aufweisen. Das Bediengerät ist insbesondere eine Maus als Zeigergerät, ein Bildschirm mit Berühroberfläche als Touchscreen, ein Empfänger zur Gestensteuerung oder eine Tastatur. In dem Speicher ist die Bedienlogik hinterlegt und wird nach der Abfolge der Bedienschritte automatisch passend dem benutzten Bediengerät ausgelesen und verwendet.

Ferner kann die Bedienlogik auch auf einem System wie einer Plattform in einem zentralen Rechner, insbesondere einem Cloud-Rechner hinterlegt sein. Ein beliebiges damit verbundenes, entferntes oder mobiles Endgerät weist dann ein Anzeigegerät und/oder das Bediengerät auf. Die Aufnahme der Bedieninformationen findet dann in einem Programm oder einer Software-Applikation auf dem Endgerät statt. Die Bedienlogik wird dann aus dem Speicher in dem zentralen Rechner abgerufen und bei Bedarf auf dem Endgerät hinterlegt.

### Bezugszeichenliste

- 1: Benutzereingabe
- 2: Bearbeitungsobjekt
- 3: Bearbeitungsfunktion
- 4: Auswahlfunktion
- 5: Abfolge von Auswahlfunktionen
- 6: Bearbeitungsschritt
- 7: Endgerät
- 8: Bildschirm

## Patentansprüche

1. Verfahren zum Betreiben einer Benutzerschnittstelle einer Datenverarbeitungsanordnung umfassend eine Eingabeeinheit zur Eingabe von Benutzereingaben und einen Bildschirm als Ausgabeeinheit,
wobei mittels einer Sequenz von Benutzereingaben (1) ein Bearbeitungsobjekt (2), das auf dem Bildschirm zumindest symbolisch dargestellt ist,
und eine Bearbeitungsfunktion (3) ausgewählt werden, wobei anhand der ausgewählten Bearbeitungsfunktion (3) dem ausgewählten Bearbeitungsobjekt (2) ein Bearbeitungsschritt (6) zugewiesen wird,
wobei das Auswählen des Bearbeitungsobjekts (2) und der Bearbeitungsfunktion (3) anhand einer Abfolge (5) von Auswahlfunktionen (4) erfolgt, wobei die Abfolge (5) einer Bedienlogik zugeordnet ist, und die Auswahlfunktionen (4) durch die Benutzereingaben (1) aktiviert werden,
wobei im Endgerät (8) eine erste Bedienlogik und eine zweite Bedienlogik hinterlegt sind, wobei die erste Bedienlogik eine erste Abfolge (5₂₃) von Auswahlfunktionen (4) und die zweite Bedienlogik eine zweite Abfolge (5₃₂) von Auswahlfunktionen (4) umfasst,
wobei die erste Abfolge (5₂₃) und die zweite Abfolge (5₃₂) jeweils demselben Bearbeitungsobjekt (3) denselben Bearbeitungsschritt (6) zuweisen können, die erste Abfolge (5₂₃) und die zweite Abfolge (5₃₂) aber durch eine jeweils zur anderen Abfolge abweichende Sequenz von Benutzereingaben (1) aktivierbar sind
**dadurch gekennzeichnet,**
**dass** das Verfahren einen Erkennungsmodus umfasst, in dem vom Nutzer getätigte Eingabebefehle zu einem Auswerteergebnis ausgewertet werden, wobei basierend auf dem Auswerteergebnis eine Bedienlogik ausgewählt wird und
**dass** das Verfahren einen Betriebsmodus umfasst, in dem ausschließlich die Bedienlogik aktiviert ist.

2. Verfahren nach dem vorherigen Anspruch, **dadurch gekennzeichnet, dass** die erste Bedienlogik eine "mausbasierte" Bedienlogik ist, während die zweite Bedienlogik eine "touchscreenbasierte" Bedienlogik ist.

3. Verfahren nach dem vorherigen Anspruch, **dadurch gekennzeichnet, dass** Benutzereingaben über einen berührungsempfindlichen Bildschirm bei aktivierter "mausbasierter" Bedienlogik möglich sind und/oder Benutzereingaben mittels einer Maus bei aktivierter "touchscreenbasierter" Bedienlogik möglich sind.

4. Verfahren nach dem vorherigen Anspruch, **dadurch gekennzeichnet, dass** im Erkennungsmodus analysiert wird, ob getätigte Benutzereingaben einer Bedienlogik entsprechen, worauf dann diese Bedienlogik ausgewählt wird und insbesondere der Erkennungsmodus anschließend automatisch ausgeschaltet wird.

5. Verfahren nach dem vorherigen Anspruch, **dadurch gekennzeichnet, dass** im Erkennungsmodus zumindest zwei Bedienlogiken aktiviert sind.

6. Verfahren nach einem der vorherigen Ansprüche, **dadurch gekennzeichnet, dass** Benutzereingabe durch Doppelklicken, einfaches Berühren, einfaches Klicken usw. realisiert werden können.

7. Datenverarbeitungsanordnung mit einer Benutzerschnittstelle, welche mittels eines Verfahrens nach einem der vorherigen Ansprüche betrieben wird.

## Claims

1. A method for operating a user interface of a data processing system comprising an input unit for inputting user inputs and a screen as the output unit,
wherein a sequence of user inputs (1) is used to select a processing object (2), which is at least symbolically illustrated on the screen,
and a processing function (3), wherein a processing step (6) is allocated to the selected processing object (2) based on the selected processing function (3),
wherein the processing object (2) and processing function (3) are selected based on a sequence (5) of selection functions (4), wherein the sequence (5) is allocated to an operating logic, and the selection functions (4) are activated by the user inputs (1),
wherein a first operating logic and a second operating logic are stored in the terminal (8), wherein the first operating logic comprises a first sequence (5₂₃) of selection functions (4) and the second operating logic comprises a second sequence (5₃₂) of selection functions (4),
wherein the first sequence (5₂₃) and the second sequence (5₃₂) can each allocate the same processing step (6) to the same processing object (3), but the first sequence (5₂₃) and the second sequence (5₃₂) can be activated by a respective sequence of user inputs (1) that deviates from the other sequence,
**characterized in that**
the method comprises a detection mode, in which input commands effected by the user are evaluated to an evaluation result, wherein an operating logic is selected based upon the evaluation result, and that the method comprises an operating mode in which exclusively the operating logic is activated.

2. The method according to the preceding claim, **characterized in that** the first operating logic is a "mouse-based" operating logic, while the second operating logic is a "touchscreen-based" operating logic.

3. The method according to the preceding claim, **characterized in that** user inputs are possible via a touch-sensitive screen given an activated "mouse-based" operating logic, and/or user inputs are possible by means of a mouse given an activated "touchscreen-based" operating logic.

4. The method according to the preceding claim, **characterized in that** an analysis is performed in the detection mode to determine whether activated user inputs correspond to an operating logic, whereupon this operating logic is then selected, and in particular the detection mode is then automatically deactivated.

5. The method according to the preceding claim, **characterized in that** at least two operating logics are activated in the detection mode.

6. The method according to one of the preceding claims, **characterized in that** user input can be realized via a double click, single touch, single click, etc.

7. A data processing system with a user interface, which is operated by means of a method according to one of the preceding claims.

## Revendications

1. Procédé destiné à faire fonctionner une interface d'utilisateur d'un système de traitement de données comprenant une unité d'entrée pour introduire des entrées d'utilisateur et un écran en tant qu'unité de sortie,
sachant qu'au moyen d'une séquence d'entrées d'utilisateur (1) un objet d'usinage (2), qui est représenté au moins symboliquement sur l'écran,
et une fonction d'usinage (3) sont choisis, sachant qu'à l'aide de la fonction d'usinage (3) choisie une étape d'usinage (6) est attribuée à l'objet d'usinage (2) choisi,
sachant que le choix de l'objet d'usinage (2) et de la fonction d'usinage (3) a lieu à l'aide d'une succession (5) de fonctions de sélection (4), sachant que la succession (5) est attribuée à une logique de commande et les fonctions de sélection (4) sont activées par les entrées d'utilisateur (1),
sachant qu'une première logique de commande et une deuxième logique de commande sont mémorisées dans le terminal (8), sachant que la première logique de commande comprend une première succession (5₂₃) de fonctions de sélection (4) et la deuxième logique de commande comprend une deuxième succession (5₃₂) de fonctions de sélection (4),
sachant que la première succession (5₂₃) et la deuxième succession (5₃₂) peuvent attribuer respectivement au même objet d'usinage (3) la même étape d'usinage (6), mais que la première succession (5₂₃) et la deuxième succession (5₃₂) peuvent être activées par une séquence d'entrées d'utilisateur (1) s'écartant respectivement par rapport à l'autre succession,
**caractérisé en ce que**
le procédé comprend un mode d'identification dans lequel les ordres d'entrée activés par l'utilisateur sont exploités en un résultat d'exploitation, sachant qu'une logique de commande est choisie en se basant sur le résultat d'exploitation et **en ce que** le procédé comprend un mode de fonctionnement dans lequel seul la logique de commande est activée.

2. Procédé selon la revendication précédente, **caractérisé en ce que** la première logique de commande est une logique de commande « basée sur une souris », alors que la deuxième logique est une logique de commande « basée sur un écran tactile ».

3. Procédé selon la revendication précédente, **caractérisé en ce que** des entrées d'utilisateur sont possibles par le biais d'un écran tactile avec une logique de commande « basée sur une souris » activée et/ou des entrées d'utilisateur sont possibles au moyen d'une souris pour une logique de commande « basée sur un écran tactile » activé.

4. Procédé selon la revendication précédente, **caractérisé en ce qu'**en mode d'identification, on analyse si les entrées d'utilisateur activées correspondent à une logique de commande, à la suite de quoi cette logique de commande est alors choisie et le mode d'identification est notamment ensuite automatiquement débranché.

5. Procédé selon la revendication précédente, **caractérisé en ce qu'**au moins deux logiques de commande sont activées en mode d'identification.

6. Procédé selon l'une quelconque des revendications précédentes, **caractérisé en ce que** l'entrée d'utilisateur peut être réalisée par double cliquage, simple toucher, simple cliquage etc.

7. Système de traitement de données avec une interface d'utilisateur, lequel est exploité au moyen d'un procédé selon l'une quelconque des revendications précédentes.
